# EUROPEAN PATENT APPLICATION

(11) **EP 4 106 186 A1**
(43) Date of publication of application: **21.12.2022**
(21) Application number: 21179278.3
(22) Date of filing: 14.06.2021
(51) Int. Cl.: H02P 29/024, H02P 29/60, H02P 29/62, H02P 29/64

(54) **METHOD OF DETERMINING COOLING EFFICIENCY OF AN ELECTRIC MOTOR**

(71) Applicant: ABB Schweiz AG, 5400 Baden (CH)
(72) Inventor: KAKOSIMOS, Panagiotis, Västerås (SE); ALKKIOMAKI, Olli, Helsinki (FI); KOLONDJOVSKI, Zlatko, Vantaa (FI)
(74) Representative: Kransell & Wennborg KB

(57) **Abstract**

A method of determining the cooling efficiency of an electric motor having a stator provided with stator windings, the method comprising: a) injecting a current into the stator windings to heat the stator windings, b) obtaining a temperature drop in the stator windings after the current injection in step a) has been terminated or the injected current has been decreased, c) comparing the temperature drop with a reference temperature drop, and d) concluding, based on the comparison, whether the cooling efficiency of the electric motor has deteriorated or not.

## Description

### TECHNICAL FIELD

The present disclosure generally relates to condition monitoring of electric motors.

### BACKGROUND

Motors often operate in inadequate cooling conditions, which are worse than those prescribed by the manufacturer and defined by the cooling standards. The motors may operate in harsh environments with poor air circulation, high ambient temperature, clogged fans and filters, blocked fins, and fouled cooling surfaces. These operating conditions may become even worse for example due to close proximity with other hot equipment, low air mass density at high altitudes, or issues in the coolant flow. In most cases, the environmental conditions are inspected only after a fatal failure occurs.

Despite that several motors today may be equipped with temperature sensors placed in the windings, it is not straightforward and an easy task to understand the operating conditions by the collected signals. These sensors are mostly used to monitor if a high temperature is experienced and then trigger an alarm. The reason is that a temperature increase in the windings may be attributed to several factors directly related to the windings and not the cooling efficiency. Therefore, a common solution adopted is to add an additional temperature sensor on the housing for sensing these phenomena. However, the use of an extra sensor adds cost and complexity.

### SUMMARY

A general object of the present disclosure is to provide a method that solves or at least mitigates the problems of the prior art.

There is hence according to a first aspect of the present disclosure provided a method of determining the cooling efficiency of an electric motor having a stator provided with stator windings, the method comprising: a) injecting a current into the stator windings to heat the stator windings, b) obtaining a temperature drop in the stator windings after the current injection in step a) has been terminated or the injected current has been decreased, c) comparing the temperature drop with a reference temperature drop, and d) concluding, based on the comparison, whether the cooling efficiency of the electric motor has deteriorated or not.

The inventors have found that the heat dissipation behaviour from the stator windings to the environment contains information that allows distinguishing problematic or non-ideal conditions in electric motor cooling efficiency. By means of the present method, the cooling efficiency of the electric motor may be monitored in an accurate way. Non-ideal performance can thus be detected.

The temperature drop may be a determined relative to a reference temperature. The reference temperature may for example be the highest temperature reached while the current is being injected.

The reference temperature drop may be determined in a previous iteration of the method for the same electric motor or a fleet of similar or identical electric motors.

The reference temperature drop may be the decrease in temperature from the reference temperature, or it may be a percentual decrease from the reference temperature.

The temperature drop may according to one example be measured a predetermined time after the reference temperature was attained. If the cooling efficiency of the electric motor has deteriorated since the reference temperature drop was determined, the temperature drop will be smaller than the reference temperature drop.

The temperature drop may according to another example have a predetermined value and thus new temperature drops are obtained until the temperature drop has reached the predetermined value. The time to reach the temperature drop from the reference temperature is compared with a reference time to reach the same temperature drop. If the cooling efficiency of the electric motor has deteriorated since the reference time was determined, the reference time will be shorter than the time to reach the temperature drop from the reference temperature point.

The reference temperature drop may have been determined for the same electric motor as the electric motor that is currently being monitored using the method.

Alternatively, the reference temperature drop may have been determined based on temperature measurements or time measurements from a fleet of identical or similar electric motors.

In step b) a plurality of temperature drops may be obtained at different times while the stator windings are cooling down. A cooling profile may thus be determined. More than one temperature drops may thus be compared with corresponding reference temperature drops.

The method may comprise obtaining a first temperature measurement before or while step a) is being performed. The first temperature measurement is the reference temperature.

The method may comprise obtaining a second temperature measurement in step b), wherein the temperature drop is determined based on the first temperature measurement and the second temperature measurement.

It is to be noted that typically in step b) no current is being injected into the stator windings. Step a) has thus normally stopped being executed when step c) is performed.

The current has a predetermined amplitude and angle.

The angle is the angle of the current in the dq-frame or in the stationary reference (α-β) frame.

The current may be the nominal current of the electric motor.

One embodiment comprises f) generating an alarm in case it is concluded that the cooling efficiency of the electric motor has deteriorated in step e).

According to one embodiment the current injected in step a) has the same amplitude and angle as a current injection used to determine the reference temperature drop.

According to one embodiment in step a) current is injected for a predetermined amount of time or until a predetermined temperature rise in the stator windings is reached from an initial temperature measurement before step a), after which the current injection is terminated or decreased. The predetermined thermal non-equilibrium condition may thus be a thermal transient condition. With thermal non-equilibrium is meant when the temperature in the stator windings changes by more than 1 K/half an hour while current is being injected. It will therefore take less time to perform the method than if thermal equilibrium would have to be reached. For example, the method may be performed in less than an hour, whereas thermal equilibrium may take many hours, such as 6-10 hours to reach, depending on the conditions and motor size.

It is to be understood that in many cases injecting certain current for a certain amount of time can be assumed to result in the same temperature rise irrespective of the initial temperature of the electric motor.

According to one embodiment the electric motor is in thermal equilibrium with its environment when step a) is initiated. An advantage with letting the electric motor reach thermal equilibrium with its environment before initiating step a) is that if the ambient temperature i.e. the temperature of the electric motor's environment is relatively constant, and the reference temperature drop is obtained using the same ambient temperature, the obtained temperature drop is directly comparable with the reference temperature drop. Another advantage is that only one temperature sensor is required even if the reference temperature drop would need to be adjusted due to different ambient temperatures at present and at the time of obtaining the reference temperature drop. A drawback with letting the electric motor reach thermal equilibrium with its environment before initiating step a) is that cooling of the electric motor may take a long time.

According to one embodiment an ambient temperature is measured. Measuring the ambient temperature enables reliably applying the method even if the electric motor is not in thermal equilibrium with its environment before initiating step a). Namely, the reference temperature drop can be adjusted to correspond to the temperature difference between the electric motor and its environment. For example, several reference temperature drop values may exist, obtained at different temperature differences between the electric motor and its environment, and the one best corresponding to the present temperature difference can be used.

A current with a certain set of parameters, such as amplitude and angle, injected for a certain amount of time will generally always result in the same temperature rise in the stator windings regardless of external factors. The reason behind this behaviour is attributed to the large difference between the thermal time constant of the electric motor and the short duration of inducing power losses in the stator windings. The temperature increases but the duration is short enough to assume that the heat is not dissipated, such as in an adiabatic process. To be more specific, the heat is dissipated but the phenomenon is still in its initial phase. Therefore, the loss injection phase is preferably kept short while allowing the winding temperature to increase considerably. The larger the temperature variation, the better accuracy is achieved.

According to one embodiment the electric motor is in thermal equilibrium with its environment when step a) is initiated.

According to one embodiment the current injected in step a) is a DC current. The rotor shaft of the electric motor will thus not be rotated. Since the rotor shaft is not being rotated, the internal motor fan will not be operated. With internal fan is here meant the fan attached to the rotor shaft. Also, the rotor blades on the rotor short-circuit ring will not cause air flow. Thus, the stator winding temperature increases by a significant and easily detectable amount. Moreover, since the motor may be installed on site for driving equipment such as pumps, standstill of the rotor shaft ensures that the test may be performed without driving the equipment.

The control system used for implementing the method may for example comprise an ACS880 drive from ABB^{®}. Step a) may involve activating a DC-hold function of the ACS880 drive.

According to one embodiment the current injected in step a) is an AC current. The operation of the internal motor fan can thereby be monitored, especially if the method is run with a DC current injection to determine whether the electric motor has a normal cooling efficiency and also run with an AC current injection. In case the cooling efficiency of the electric motor turns out to be normal when a DC current is injected and the cooling efficiency of the electric motor has deteriorated when run with an AC current, it may be concluded in step d) that the internal motor fan has issues. The method could alternatively be run two times, each time with an AC current of a different amplitude and/or frequency instead of one run with a DC current injection and one run with an AC current injection.

One embodiment comprises performing steps a)-d) with external cooling for cooling the electric motor in a first state and performing steps a)-d) with external cooling in a second state, wherein in the iteration when the external cooling is in the first state the reference temperature drop used has been determined with the external cooling in the first state and in the iteration when the external cooling is in the second state the reference temperature drop used has been determined with the external cooling in the second state.

In this way, it is possible to determine whether there are issues with the external cooling equipment such as an external fan. For example, in one run of steps a)-d) the external cooling may be turned off and in another run of steps a)-d) the external cooling maybe turned on. In case no issues are present with the external cooling turned off but it turns out that it is concluded that the cooling efficiency has deteriorated with the external cooling turned on in step d) compared with a previous run of the method with the external cooling turned on, it may be concluded that there are issues with the external cooling equipment.

According to one embodiment the first state and the second state are different states, each being one of: operation at a first reduced capacity, operation at a second reduced capacity different from the first reduced capacity, full capacity, and off.

There is according to a second aspect of the present disclosure provided a control system for determining the cooling efficiency of an electric motor having a stator provided with stator windings, wherein the control system is configured to perform the method of the first aspect.

The control system may for example comprise a drive configured to perform steps a)-d). Alternatively, the control system may for example comprise a drive configured to perform the current injection in step a), and a remote device configured to perform steps b)-d). The remote device may for example be connected to the drive by means of a wire or via a wireless network.

The control system may comprise a storage medium comprising computer code, and processing circuitry which when executing the computer code causes the control system to perform the method of the first aspect.

There is according to a third aspect of the present disclosure provided a computer program comprising computer code which when executed by processing circuitry of a control system causes the control system to perform the method of the first aspect.

There is according to a fourth aspect of the present disclosure provided an electric motor assembly comprising: an electric motor comprising a stator provided with stator windings, and at least one temperature sensor configured to detect the temperature in the stator windings; and a control system according to the second aspect, configured to receive temperature measurements from the at least one temperature sensor.

Generally, all terms used in the claims are to be interpreted according to their ordinary meaning in the technical field, unless explicitly defined otherwise herein. All references to "a/an/the element, apparatus, component, means, etc. are to be interpreted openly as referring to at least one instance of the element, apparatus, component, means, etc., unless explicitly stated otherwise.

### BRIEF DESCRIPTION OF THE DRAWINGS

The specific embodiments of the inventive concept will now be described, by way of example, with reference to the accompanying drawings, in which:
Fig. 1 schematically shows an example of an electric motor assembly;
Fig. 2 schematically shows another example of an electric motor assembly;
Fig. 3 shows a method of determine the cooling efficiency of an electric motor having a stator provided with stator windings; and
Fig. 4 shows temperature curves when the electric motor is operating normally and when the cooling efficiency of the electric motor has deteriorated.

### DETAILED DESCRIPTION

The inventive concept will now be described more fully hereinafter with reference to the accompanying drawings, in which exemplifying embodiments are shown. The inventive concept may, however, be embodied in many different forms and should not be construed as limited to the embodiments set forth herein; rather, these embodiments are provided by way of example so that this disclosure will be thorough and complete, and will fully convey the scope of the inventive concept to those skilled in the art. Like numbers refer to like elements throughout the description.

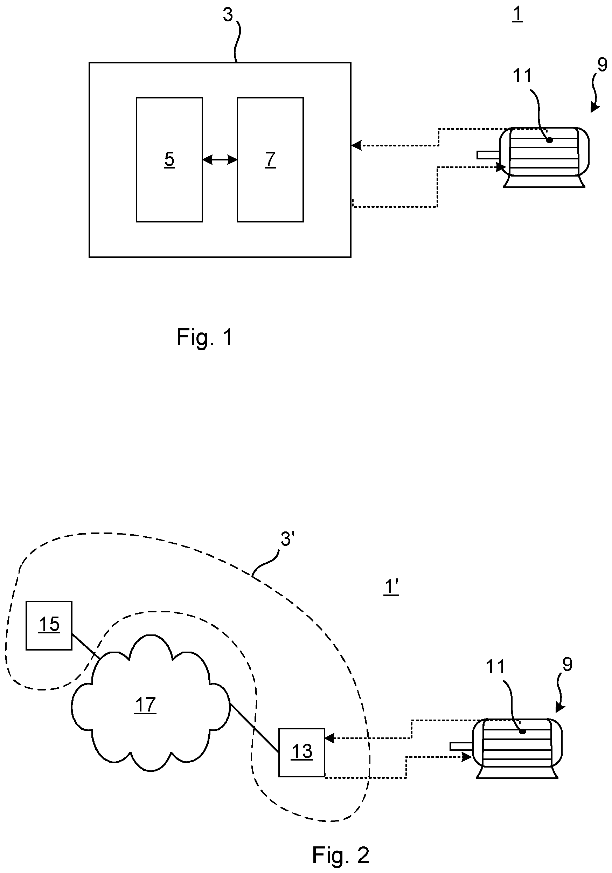

Fig. 1 depicts an electric motor assembly 1. The electric motor assembly 1 comprises a control system 3. The control system 1 is configured to determine the cooling efficiency of an electric motor having a stator provided with stator windings.

The electric motor assembly 1 comprises an electric motor 9. The electric motor 9 may be a synchronous or an asynchronous motor.

The electric motor 9 comprises a stator, and a rotor configured to electromagnetically interact with the stator.

The stator comprises stator windings. The electric motor 9 comprises at least one temperature sensor 11 configured to measure the temperature in the stator windings.

The stator may have stator slots in which the stator windings are arranged. Each one of the at least one temperature sensor 11 may be arranged in a respective stator slot. In case of several temperature sensors 11, at least some temperature sensors 11 may for example be provided in stator slots in which stator windings of different electrical phases are arranged.

In the example in Fig. 1, the control system 3 is centralised. The control system 3 may in this case for example be a drive. The control system 3 comprises a storage medium 5 containing computer code, and processing circuitry 7 configured to execute the computer code and thereby perform the steps of any method disclosed herein to determine the cooling efficiency of the electric motor 9.

The processing circuitry 7 may for example use any combination of one or more of a suitable central processing unit (CPU), multiprocessor, microcontroller, digital signal processor (DSP), application specific integrated circuit (ASIC), field programmable gate arrays (FPGA) etc., capable of executing any herein disclosed operations concerning determining the cooling efficiency of the electric motor 9.

The storage medium 5 may for example be embodied as a memory, such as a random access memory (RAM), a read-only memory (ROM), an erasable programmable read-only memory (EPROM), or an electrically erasable programmable read-only memory (EEPROM) and more particularly as a non-volatile storage medium of a device in an external memory such as a USB (Universal Serial Bus) memory or a Flash memory, such as a compact Flash memory.

In the example in Fig. 2, the control system 3' is decentralised. The control system 3' may in this case comprise a drive 13 configured to control the electric motor 3. The drive 13 is configured to inject a current into the stator windings.

The drive 13 may be configured to receive temperature measurements from the at least one temperature sensor 11 and transmit them to an external device 15 via a wireless network 17 or a wired connection. Alternatively, the at least one temperature sensor 11 may be configured to send the temperature measurements to the external device 15 directly or indirectly via an intermediate device other than the drive 13. The external device 15 is configured to process the temperature measurements to determine the cooling efficiency of the electric motor 9.

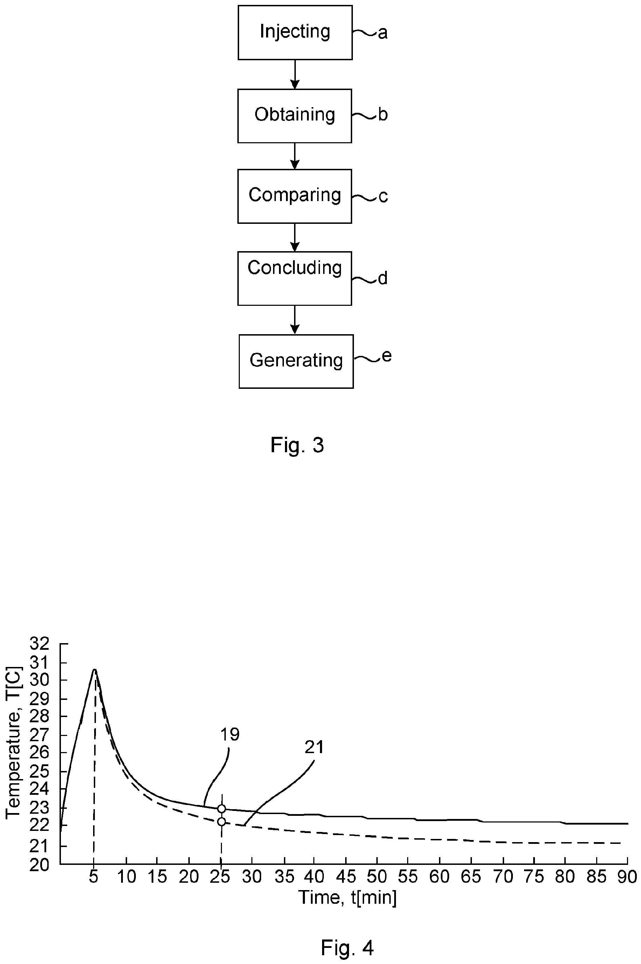

Methods of determining the cooling efficiency of the electric motor 9 by means of the control system 3, 3' will now be described with reference to Figs 3 and 4.

In a step a) a current is injected into the stator windings to heat the stator windings.

The current is preferably injected until a predetermined thermal non-equilibrium condition is reached in the stator windings and is thereafter terminated or decreased in amplitude. Alternatively, the current may be injected until thermal equilibrium is reached in the stator windings, i.e. when the temperature in the stator windings do not increase by more than 1K/30 minutes while current is being injected.

The current may be a DC current or an AC current.

The current is typically only injected for a certain amount of time, for example for a predetermined amount of time. Alternatively, the current may be injected only until a predetermined temperature rise in the stator windings has been reached from an initial temperature measurement before step a). For example, the goal may be to reach an increase of 5°C or 10°C compared to the initial temperature in the stator windings, which is the temperature in the stator windings before step a) is performed.

In a step b) a temperature drop in the stator windings is obtained after the current injection in step a) has been terminated or the injected current has been decreased.

The temperature drop may for example be determined based on a first temperature measurement and second temperature measurement. The first temperature measurement may be measured while step a) is being executed, i.e. while current is being injected into the stator windings, and may for example be the highest temperature reached while step a) is being executed. The second temperature measurement may be obtained after the current injection in step a) has been terminated or the injected current has been decreased. The second temperature measurement is thus from a temperature measurement of the stator windings after current injection into the stator windings has ceased or decreased and the stator windings are cooling down.

The temperature drop may be the difference between the first temperature measurement and the second temperature measurement. Alternatively, the temperature drop may be the ratio between the second temperature measurement and the first temperature measurement.

In a step c) the temperature drop is compared with a reference temperature drop.

Fig. 4 shows two example temperature curves. The temperature curve 19 exemplifies the temperature in the stator windings during the current iteration of the method and the temperature curve 21 is a reference temperature curve. Both temperature curves 19 and 21 were in this example obtained using the exact same start conditions, which would not be that likely in reality.

According to the example, the initial temperature in the stator windings is about 25°C for both curves 19 and 21. Step a) is performed for 5 minutes, when the highest temperature of about 31°C is reached for both curves 19 and 21. The current injection then ceases and the stator windings are cooled down.

The second temperature measurement is obtained 20 minutes after the current injection has ceased. At this point, the second temperature measurement for the present iteration of the method is about 23°C and the temperature drop is about 8 degrees, or seen in another way the 23°C reached is 74% of the highest temperature. For the reference temperature curve 21, temperature drops from 31°C to 22.5°C. Thus, the reference temperature drop is 8.5 degrees, or seen in another way the 22.5°C reached is about 72.5% of the highest temperature. The temperature drop can thus be seen either as the difference between the first and the second temperature measurements, or as a percentage of the reference temperature, in this example the highest reached temperature.

Instead of using a predetermined time, such as 20 minutes as in the example above, the temperature drop may be obtained repeatedly until a predetermined value has been reached, such as 8 degrees or 80% of the highest temperature, while the stator windings are cooling down. In this case, the time to reach the predetermined value is compared with a reference time to reach the predetermined value.

A plurality of temperature measurements may be obtained from the at least one temperature sensor 11 while the stator windings are cooling down, as well as when they are heating up during step a). Temperature curves such as temperature curves 19 and 21 may thus be obtained.

The reference temperature drop has been obtained using the same amplitude and angle for the injected current. Moreover, the reference temperature drop is obtained using the corresponding temperature measurements as the present iteration of the method. For example, if the first temperature measurement was the highest temperature reached during step a), then the reference temperature drop was also obtained using the highest temperature reached during a previous run of the method from the same electric motor 9 or from an average of reference temperature drops from a fleet of electric motors that are similar or identical, for the normalisation.

In a step d) it is concluded whether the cooling efficiency of the electric motor 9 has deteriorated or not based on the comparison in step c).

In the present example, temperature drop is about 8 degrees, or the temperature has dropped to 74% of the highest temperature. The former is about 6% less than the reference temperature drop of about 8.5 degrees. If, for example, a predetermined margin is set to so that a 5% smaller temperature drop than the reference temperature drop indicates deterioration, then in this example it would be concluded that the cooling efficiency of the electric motor 9 has deteriorated. Alternatively, the time of 25 minutes could be compared with the reference time of somewhere between 15-20 minutes to reach the temperature drop of about 74% from the highest temperature 31°C.

In a step e) an alarm may be generated in case it in step d) is concluded that the cooling efficiency of the electric motor 9 has deteriorated.

According to one variation, steps a)-d) may in a first iteration be performed with external cooling for cooling the electric motor in a first state and in a second iteration steps a)-d) may be performed with external cooling in a second state.

The reference temperature drop used in the first iteration was obtained when the external cooling was in the first state. The reference temperature drop used in the second iteration was obtained when the external cooling was in the second state. The first state and the second state are different states selected from a first reduced capacity, operation at a second reduced capacity different from the first reduced capacity, full capacity, and off. In this way, it may be possible to determine whether there are issues with the external cooling equipment.

The inventive concept has mainly been described above with reference to a few examples. However, as is readily appreciated by a person skilled in the art, other embodiments than the ones disclosed above are equally possible within the scope of the inventive concept, as defined by the appended claims.

## Claims

1. A method of determining the cooling efficiency of an electric motor (9) having a stator provided with stator windings, the method comprising:
a) injecting a current into the stator windings to heat the stator windings,
b) obtaining a temperature drop in the stator windings after the current injection in step a) has been terminated or the injected current has been decreased,
c) comparing the temperature drop with a reference temperature drop,
and
d) concluding, based on the comparison, whether the cooling efficiency of the electric motor (9) has deteriorated or not.

2. The method as claimed in claim 1, comprising e) generating an alarm in case it is concluded that the cooling efficiency of the electric motor (9) has deteriorated in step d).

3. The method as claimed in claim 1 or 2, wherein the current injected in step a) has the same amplitude and angle as a current injection used to determine the reference temperature drop.

4. The method as claimed in any of the preceding claims, wherein in step a) current is injected for a predetermined amount of time or until a predetermined temperature rise in the stator windings is reached from an initial temperature measurement before step a), after which the current injection is terminated or decreased.

5. The method as claimed in any of the preceding claims, wherein the electric motor (9) is in thermal equilibrium with its environment when step a) is initiated.

6. The method as claimed in any of the preceding claims, further comprising measuring ambient temperature.

7. The method as claimed in any of the preceding claims, wherein the current injected in step a) is a DC current.

8. The method as claimed in any of claims 1-6, wherein the current injected in step a) is an AC current.

9. The method as claimed in any of the preceding claims, comprising performing steps a)-d) with external cooling for cooling the electric motor in a first state and performing steps a)-d) with external cooling in a second state, wherein in the iteration when the external cooling is in the first state the reference temperature drop used has been determined with the external cooling in the first state and in the iteration when the external cooling is in the second state the reference temperature drop used has been determined with the external cooling in the second state.

10. The method as claimed in claim 9, wherein the first state and the second state are different states, each being one of: operation at a first reduced capacity, operation at a second reduced capacity different from the first reduced capacity, full capacity, and off.

11. A control system (3; 3') for determining the cooling efficiency of an electric motor (9) having a stator provided with stator windings, wherein the control system (3; 3') is configured to perform the method as claimed in any of claims 1-108.

12. An electric motor assembly (1; 1') comprising:
an electric motor (9) comprising:
a stator provided with stator windings, and
at least one temperature sensor (11) configured to detect the temperature in the stator windings; and
a control system (3; 3') as claimed in claim 11, configured to receive temperature measurements from the at least one temperature sensor (11).
